# EUROPÄISCHE PATENTSCHRIFT

(11) **EP 2 014 493 B1**
(45) Veröffentlichungstag und Bekanntmachung des Hinweises auf die Patenterteilung: **14.12.2011**
(21) Anmeldenummer: 08011042.2
(22) Anmeldetag: 18.06.2008
(51) Int. Cl.: B60J 1/20, E06B 9/58

(54) **Seitenführung für Beschattungsrollo und Beschattungsrollo für Kraftfahrzeuge**
Lateral guide for a roller blind and roller blind for motor vehicles
Guidage latéral pour store d'occultation et store d'occultation pour véhicule automobile

(30) Priorität: 11.07.2007 DE 102007034693
(43) Veröffentlichungstag der Anmeldung: 14.01.2009
(73) Patentinhaber: BOS GmbH & Co. KG, 73760 Ostfildern (DE)
(72) Erfinder: Weinbrenner, Harry, 72644 Oberboihingen (DE)
(74) Vertreter: Patentanwälte Ruff, Wilhelm, Beier, Dauster & Partner

(56) Entgegenhaltungen:
- EP-A1- 1 215 063
- EP-A1- 1 375 220
- EP-A2- 1 182 066
- EP-A2- 1 533 157
- EP-A2- 1 582 386
- EP-A2- 1 736 335
- EP-A2- 1 747 923
- DE-A1- 10 339 583

## Beschreibung

Die Erfindung betrifft eine Seitenführung für ein Beschattungsrollo und ein zugehöriges Beschattungsrollo für Kraftfahrzeuge.

Aus der EP 1 533 157 A2 ist ein Heckscheibenrollo bekannt, welches eine Wickelwelle, eine darauf aufwickelbare Rollobahn und ein am freien Ende der Rollobahn angebrachtes Auszugprofil umfasst. Das Auszugprofil ist an mindestens einem Ende in einer Führungsschiene geführt. Das Heckscheibenrollo umfasst weiter eine Sockeleinrichtung, welche als Lagereinrichtung für die Wickelwelle dient. Zur Montage können die Führungsschienen an einem Montageband in Seitenverkleidungsteile der C-Säulen des Kraftfahrzeugs eingesetzt und an diesen montiert werden. Die Führungsschiene ist mit einem ersten Steckmittel versehen. Die Sockeleinrichtung weist eine Koppeleinrichtung auf, welche ein zweites Steckmittel umfasst, das zu dem ersten Steckmittel komplementär und mit diesem kuppelbar ist. Das Heckscheibenrollo kann mit der Sockeleinrichtung beispielsweise unterhalb einer Heckablage montiert werden. Anschließend können in einem separaten Schritt die Seitenverkleidungsteile mit den darin eingesetzten Führungsschienen an den C-Säulen montiert werden. In einem weiteren Schritt werden die Steckmittel miteinander passgenau verrastet. Das zweite Steckmittel ist über einen federelastischen Stil gelagert, um so die beiden Steckmittel relativ zueinander zu positionieren.

Es ist eine Aufgabe der Erfindung, eine Seitenführung für ein Beschattungsrollo zu schaffen, welche auf einfache Weise unter Berücksichtigung von Fertigungstoleranzen montierbar ist. Es ist eine weitere Aufgabe der Erfindung, ein zugehöriges Beschattungsrollo zu schaffen.

Die Aufgabe der Erfindung wird gelöst durch eine Seitenführung für ein Beschattungsrollo umfassend mindestens eine Führungsschiene mit einem ersten Steckmittel und ein Anschlussstück mit einem zweiten Steckmittel, das zu dem ersten Steckmittel komplementär und mit diesem kuppelbar ist, wobei die miteinander gekuppelten Steckmittel für einen Toleranzausgleich relativ zueinander verschieblich sind. Die Verbindung zwischen der Führungsschiene und dem Anschlussstück - genauer zwischen den beiden Steckmitteln - ist somit mindestens in eine Steckrichtung oder Axialrichtung der Schiene nicht starr. In anderen Worten weist die Steckverbindung zumindest in Steckrichtung einen Freiheitsgrad auf. Die Steckrichtung wird auch als Axialrichtung der Führungsschiene bezeichnet, wobei die Führungsschiene bogenförmig verlaufen kann. Durch eine in die Steckrichtung individuell wählbare Steckposition ist somit beispielsweise ein Toleranzausgleich zwischen einer fest im Kraftfahrzeug verbauten Führungsschiene und einem dem Beschattungsrollo zugeordneten Anschlussstück möglich. Die Steckmittel können dabei an den gegenüberliegenden Enden der Führungsschiene und des Anschlussstücks ausgeformt sein.

In einer Weiterbildung der Erfindung weisen die Steckmittel in Steckrichtung mindestens eine Nut und eine dazu komplementäre Feder auf. Durch die Nut-Feder-Verbindung ist eine Verdrehsicherung realisierbar. Die Nut ist dabei in einer Ausführungsform an der Führungsschiene ausgebildet, wobei die komplementäre Feder an dem Anschlussstück ausgebildet ist. Alternativ oder zusätzlich ist eine Feder an der Führungsschiene ausgebildet, welche in eine Nut an dem Anschlussstück einsetzbar ist.

In einer Ausgestaltung der Erfindung weisen die Steckmittel in Steckrichtung komplementäre Verzahnungen auf. Durch derartige Verzahnungen ist es möglich, dass bei einem Kuppeln verbleibende Lücken oder ein verbleibender Spalt zwischen dem Anschlussstück und der Führungsschiene nicht als sogenannte Holperstellen oder Unebenheiten für ein in der Führungsschiene verschiebbares Gleitelement oder dergleichen wirken. Die Breite der einzelnen Nuten und/oder Federn, durch welche die Verzahnung gebildet wird, ist dabei vorzugsweise geringer als die Breite eines in der Führungsschiene geführten Gleitelements.

In einer Ausgestaltung der Erfindung weist mindestens ein Steckmittel mindestens ein Rastelement auf, durch das die Führungsschiene und das Anschlussstück in Steckrichtung unter Spiel miteinander verrastbar sind. In anderen Worten sind die Steckmittel in Steckrichtung schwimmend miteinander verbunden. Das Rastmittel bildet einen Anschlag, da es eine maximale Entfernung der Steckmittel voneinander begrenzt und dadurch eine unerwünschte Entkupplung beim Gebrauch verhindert.

In einer Weiterbildung der Erfindung weisen die Führungsschiene und das Anschlussstück koaxial kuppelbare Führungsnuten für ein Gleitelement auf. Das Gleitelement ist beispielsweise mit einem Auszugprofil einer Rollobahn des Beschattungsrollos verbunden. An dem Gleitelement können in einer Ausgestaltung Mittel zum Verschieben des Gleitelements in den Führungsnuten angreifen. Die Führungsschiene und/oder die Führungsnut verlaufen vorzugsweise gekrümmt, insbesondere (kreis-)bogenförmig, wobei jedoch Unstetigkeiten im Verlauf der Führungsnut für eine gute Verschiebbarkeit des Gleitelements vermieden werden. Vorzugsweise folgt die Krümmung der Führungsschiene und/oder der Führungsnut einer Kontur eines zugehörigen Fensters.

Die Aufgabe wird weiter gelöst durch ein Beschattungsrollo für ein Kraftfahrzeug mit einem Auszugprofil, das in einer erfindungsgemäßen Seitenführung geführt. Das Beschattungsrollo ist beispielsweise als Sonnenschutzrollo an einem Panoramafenster im Fahrzeughimmel, als Sonnen- und/oder Sichtschutzrollo an einer Seitentüre oder als Heckscheibenrollo gestaltet. Das Auszugprofil weist in einer Ausgestaltung an mindestens einem Ende ein Gleitelement oder dergleichen auf, welches in der Führungsnut verschieblich gelagert ist. Das Gleitelement ist in einer Ausgestaltung einteilig mit dem Auszugprofil gestaltet. In anderen Ausgestaltungen ist das Gleitelement beispielsweise als Gleitstein getrennt gefertigt, wobei eine Verbindung zwischen Auszugprofil und Gleitstein schwenkbar gestaltet sein kann. Für den Gleitstein und/oder die Führungsnut sind Materialen mit guten Gleiteigenschaften verwendbar. Das Auszugprofil ist an einem freien Ende einer Rollobahn angeordnet, so dass die Rollobahn durch Aufbringen einer Kraft an dem Auszugprofil in einer Abzugrichtung von einer Wickelwelle abwickelbar ist. Das Auszugprofil ist in einer Ausgestaltung fest mit der Rollobahn verbunden und/oder zumindest teilweise einteilig mit dieser gestaltet. In anderen Ausgestaltungen ist das Auszugprofil entlang einer Kante der Rollobahn verschieblich an dieser angebracht.

In einer Ausgestaltung des Beschattungsrollos ist die Führungsschiene mit einer Karosserie und/oder einem Verkleidungsteil eines Kraftfahrzeugs, insbesondere im Bereich einer C-Säule, verbunden und/oder zumindest abschnittsweise einteilig mit diesem gestaltet. Das Beschattungsrollo ist beispielsweise als Heckscheibenrollo gestaltet, wobei die Führungsschienen an den C-Säulen des Kraftfahrzeugs angeordnet sind. Die Führungsschienen sind bereits in einer Vormontage mit der Kraftfahrzeugkarosserie und/oder einem entsprechenden Seitenverkleidungsteil verbindbar, wobei hierfür an jeder Führungsschiene geeignete Rastmittel vorgesehen sein können, wie sie beispielsweise in der EP 1 533 157 A2 beschrieben sind. Durch die erfindungsgemäße Steckverbindung mit Toleranzausgleich ist ein einfaches Verbinden der an dem Seitenverkleidungsteil angebrachten Führungsschiene mit dem Anschlussstück bei der Endmontage möglich.

In einer Ausgestaltung des Beschattungsrollos ist das Anschlussstück an einer Sockeleinrichtung ausgebildet und/oder mit einer Sockeleinrichtung verbindbar. Die Sockeleinrichtung dient einer Vormontage und/oder einem Testbetrieb des Beschattungsrollos. Das Beschattungsrollo kann mit der Sockeleinrichtung in dem Kraftfahrzeug montiert werden, beispielsweise im Bereich eines Seitenfensters oder unterhalb einer Heckablage. Eine entsprechende Sockeleinrichtung ist beispielsweise in der bereits genannten EP 1 533 157 A2 beschrieben, auf deren Inhalt vollumfänglich Bezug genommen wird. Die Sockeleinrichtung umfasst in einer Ausgestaltung einen federelastischen Zapfen oder Stil, durch welchen das Anschlussstück gelagert ist. Durch eine derartige elastische Lagerung sind weitere Freiheitsgrade für die Steckverbindung des Anschlussstücks mit der Führungsschiene realisiert. Die Sockeleinrichtung dient vorzugsweise auch als Halterung für eine Wickelwelle des Beschattungsrollos.

In einer Ausgestaltung des Beschattungsrollos ist eine Antriebseinrichtung zum Abwickeln einer Rollobahn von einer Wickelwelle und/oder zum Aufwickeln der Rollobahn auf eine Wickelwelle vorgesehen. Durch die Antriebseinrichtung ist eine vollautomatische und/oder halbautomatische Betätigung des Beschattungsrollos möglich. Eine halbautomatische Betätigungseinrichtung ist beispielsweise als Federspeicheranordnung gestaltet, wobei die Wickelwelle und/oder die Rollobahn in einer Verstauposition arretierbar sind und nach Lösen der Arretierung die Rollobahn aufgrund einer Federkraft abgewickelt wird. Ein Einfahren und Aufwickeln der Rollobahn erfolgt dagegen von Hand entgegen der Federkraft der Federspeicheranordnung, wobei durch eine Rückholfeder eine kompakte Aufwicklung der Rollobahn auf die Wickelwelle realisiert wird. In einer anderen Ausgestaltung kann ein Abwickeln durch eine manuelle Betätigung erfolgen, wobei die Rollobahn beispielsweise in einer Position oder mehreren gewünschten, ausgefahrenen Positionen verhakt werden kann und ein Aufwickeln durch die Rückholfeder oder einen Federmotor nach Lösen der Verhakung automatisch erfolgt. In einer anderen Ausgestaltung sind motorische Antriebe vorgesehen, wobei der Nutzer durch den motorischen Antrieb in der Betätigung unterstützt wird und/oder der motorische Antrieb eine manuelle Betätigung ersetzt. Der motorische Antrieb wirkt beispielsweise mit einer sogenannten Antenne zusammen, welche an dem Auszugprofil zum Abwickeln der Rollobahn angreift. Der motorische Antrieb kann beispielsweise als pneumatischer Antrieb, hydraulischer Antrieb und/oder mit einem Elektromotor gestaltet sein.

In einer Ausgestaltung der Erfindung umfasst die Antriebseinrichtung mindestens ein biegsames Schubelement, welches ausknicksicher in der Führungsschiene und/oder dem Anschlussstück führbar ist. Das Schubelement greift an einem Gleitelement oder dergleichen an, welches in der Führungsnut geführt ist und mit dem Beschattungsrollo, insbesondere mit einem Auszugprofil wirkverbunden ist. Das Schubelement ist beispielsweise als sogenannte Flexwelle, Zahnstange oder Zahnschnur mit einem im Wesentlichen zylinderförmigen Kern und einer den Kern umgebenden Wendel gestaltet. Eine derartige Zahnstange ist auf einfache Weise durch ein Zahnrad antreibbar, welches wiederum mit einem Elektromotor oder dergleichen antreibbar ist.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich Verfahrensschritte, konstruktive Einzelheiten und räumliche Anordnungen, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine teilweise freigeschnittene, perspektivische Darstellung eines Fondbereichs eines Kraftfahrzeugs mit Blick auf die Innenseite der hinteren, rechten Tür;
- Fig. 2:: eine teilweise freigeschnittene, perspektivische Darstellung des Fondbereichs des Kraftfahrzeugs gemäß Fig. 1 mit Blick von hinten auf einen Innenbereich;
- Fig. 3:: ein Detail III gemäß Fig. 2;
- Fig. 4:: ein Detail IV gemäß Fig. 2 und
- Fig. 5:: eine Alternative Ausführungsform des Details gemäß Fig. 4.

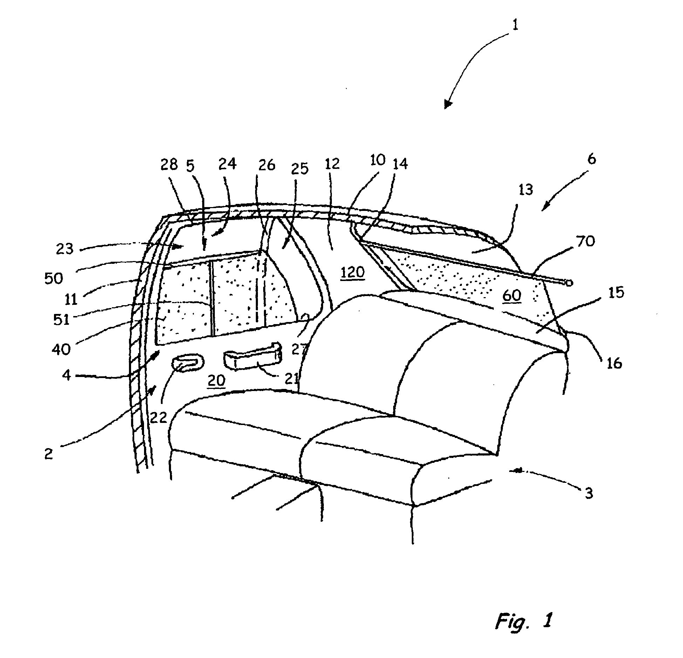

Figur 1 zeigt schematisch einen Fondbereich eines Kraftfahrzeugs 1 in einer teilweise freigeschnittenen, perspektivischen Darstellung mit Blick auf die Innenseite einer hinteren, rechten Seitentür 2. Das Kraftfahrzeug 1 weist ein Fahrzeugdach 10 auf, von dem seitlich eine B-Säule 11 des Kraftfahrzeugs 1 zu einer nicht dargestellten Bodengruppe führt. Bekanntermaßen ist eine entsprechende B-Säule auch auf der Figur 1 nicht dargestellten linken Seite des Kraftfahrzeugs 1 vorgesehen. Das dargestellte Kraftfahrzeug 1 weist weiter eine C-Säule 12 mit einer Seitenverkleidung 120 auf. Das Dach 10 geht an einer Hinterkante in einen Rahmen einer Heckfensteröffnung 13 über, in welche eine nicht dargestellte Heckscheibe eingesetzt werden kann. Zwischen der B-Säule 11 und der C-Säule 12 ist die rechte, hintere Seitentür 2 auf bekannte Weise angebracht, insbesondere mittels nicht dargestellter Scharniere. Auf Höhe der Seitentür 2 befindet sich eine Rücksitzbank 3.

Die in Fig. 1 sichtbare, einem Innenraum des Kraftfahrzeugs 1 zugewandte Innenseite der Seitentür 2 weist eine Innenverkleidung 20 auf. An der Innenverkleidung 20 sind ein Türgriff 21 und eine Betätigungsklinke 22 für ein nicht dargestelltes Türschloss vorgesehen. Weitere, nicht dargestellte Elemente, wie Lautsprecher und dergleichen, können ebenfalls in die Seitentür 2 integriert und/oder daran angebracht sein.

Die Seitentür 2 weist eine Fensteröffnung 23 auf, welche in einen ersten Abschnitt 24 und einen zweiten Abschnitt 25 durch einen Steg 26 unterteilt ist. Der zweite Abschnitt 25 ist dabei als Öffnung für ein sogenanntes Dreiecksfenster gestaltet, so dass die Fensteröffnung 23 im Wesentlichen trapezförmig ist. Die Fensteröffnung 23 weist einen unteren Rand 27 und einen oberen Rand 28 auf, wobei der obere Rand 28 üblicherweise nicht parallel zu dem unteren Rand 27 verläuft, sondern gekrümmt verlaufen kann. In die Fensteröffnung 23 ist ein nicht dargestelltes, zweiteiliges Seitenfenster einsetzbar. Das Seitenfenster ist üblicherweise zumindest in dem ersten Abschnitt 24 verschieblich.

Die Fensteröffnung 23 ist durch ein als Seitenfensterrollo 4 mit einer Rollobahn 40 gestaltetes Beschattungsrollo abdeckbar. Zum Abwickeln der Rollobahn 40 von einer nicht dargestellten Wickelwelle umfasst das dargestellte Seitenfensterrollo 4 Linearführungsmittel 5 mit einem Auszugprofil 50 und einer Antenne oder Stange 51. Das Auszugprofil 50 ist an einem freien Rand der Rollobahn 40 angebracht. Das Auszugprofil 50 ist in einer in der B-Säule 11 angeordneten, nicht sichtbaren seitlichen Führungsschiene geführt. In dem dargestellten Ausführungsbeispiel ist das Auszugprofil 50 mittels der Stange 51 bewegbar. Alternativ und/oder zusätzlich ist es auch denkbar, dass das Linearführungsmittel 5 Schubglieder oder dergleichen umfasst, welche in der nicht sichtbaren Führungsschiene geführt sind. In wieder anderen Ausgestaltungen erfolgt ein Abwickeln der Rollobahn 40 manuell.

Weiter ist in dem dargestellten Ausführungsbeispiel ein als Heckscheibenrollo 6 gestaltetes Beschattungsrollo mit einer Rollobahn 60 zur Abdeckung der Heckscheibenöffnung 13 vorgesehen. An dem freien Ende der Rollobahn 60 ist ein Auszugprofil 70 angeordnet, welches in zwei seitlichen Führungsschienen 14 geführt ist, von denen in Fig. 1 nur eine sichtbar ist. Die Führungsschienen 14 sind im Bereich der C-Säulen 12 angeordnet und mit der Fahrzeugkarosserie und/oder der Seitenverkleidung verbunden. Die Rollobahn 60 ist auf eine in Fig. 1 nicht dargestellte Wickelwelle aufwickelbar, welche unterhalb einer Heckablage 15 angeordnet ist, wobei die Rollobahn 60 durch einen Schlitz 16 geführt ist.

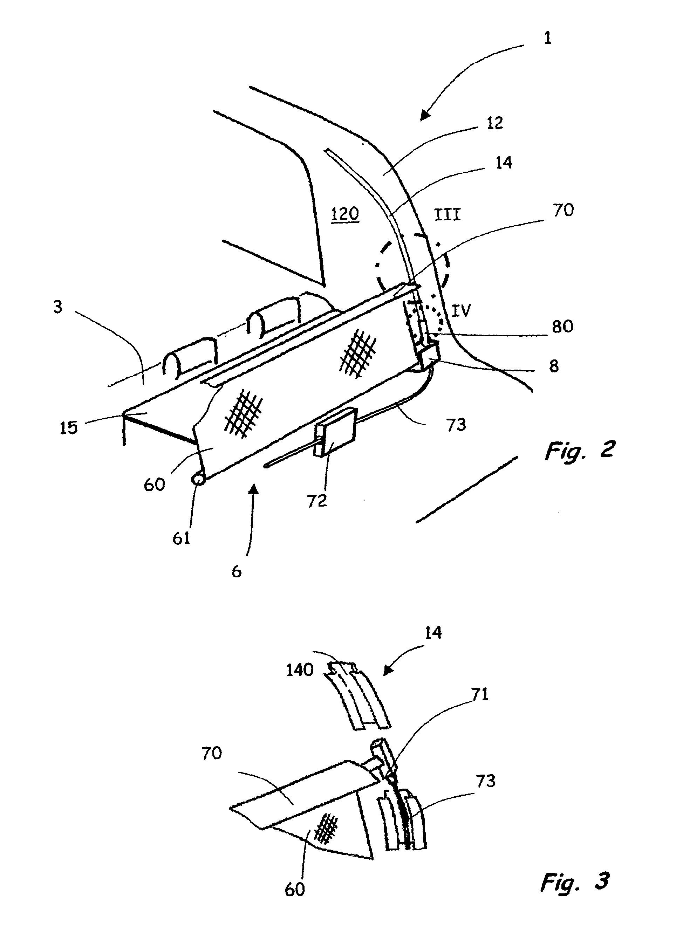

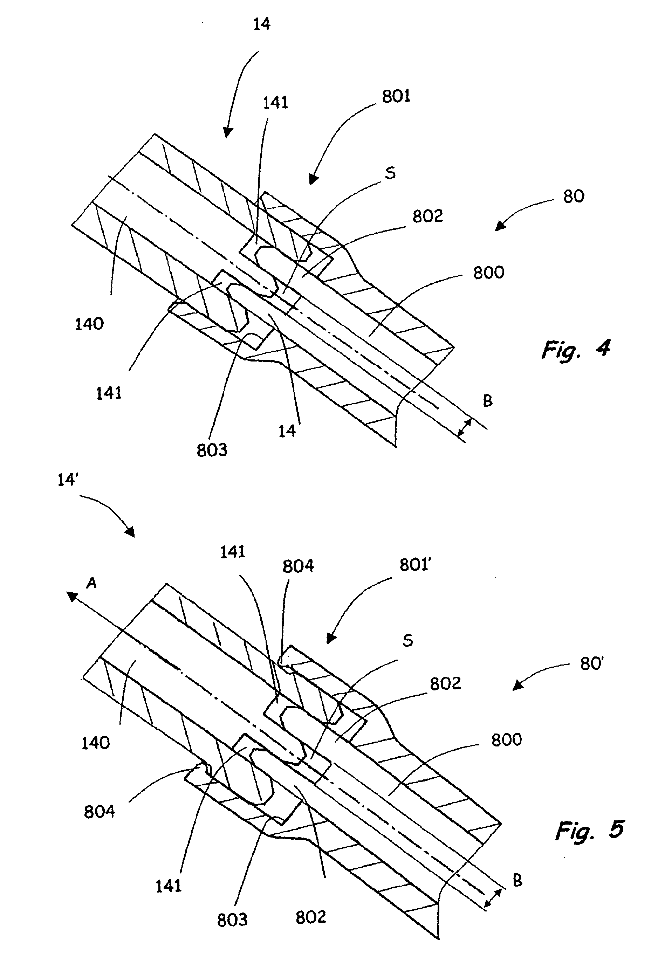

Fig. 2 zeigt schematisch den Fondbereich des Kraftfahrzeugs 1 gemäß Fig. 1 mit Blick von hinten auf den Innenbereich, wobei insbesondere das Heckscheibenrollo 6 sichtbar ist. Details III und IV sind vergrößert in den Fig. 3 und 4 dargestellt. Das dargestellte Heckscheibenrollo 6 umfasst eine Wickelwelle 61, auf welche die Rollobahn 60 aufwickelbar ist. Die Wickelwelle 61 ist in einer schematisch dargestellten Sockeleinrichtung 8 gelagert. An dem freien Ende der Rollobahn 60 ist das Auszugprofil 70 angeordnet.

Das Auszugprofil 70 weist an beiden Enden Gleitelemente 71 auf, wobei eines der Gleitelemente 71 im Detail in Fig. 3 erkennbar ist. Das Gleitelement 71 ist verschwenkbar mit dem Auszugprofil 70 verbunden. Die Führungsschiene 14 weist eine Führungsnut 140 auf, in welcher das Gleitelement 71 verschiebbar geführt ist. Die Führungsnut 140 kann hierfür eine beliebige Form aufweisen.

In dem dargestellten Ausführungsbeispiel ist ein motorischer Antrieb 72 zum automatischen und/oder ferngesteuerten Auf- und/oder Abwickeln der Rollobahn 60 von der Wickelwelle 61 vorgesehen. Der motorische Antrieb 72 wirkt in dem dargestellten Ausführungsbeispiel mit einem schematisch dargestellten Schubglied 73 zusammen, welches wie in Fig. 3 dargestellt an dem Gleitelement 71 zum Abwickeln der Rollobahn 60 angreift. Das Schubglied 73 ist beispielsweise als sogenannte Zahnschnur gestaltet, welche durch ein nicht dargestelltes, am Antrieb 72 vorgesehenes Zahnrad antreibbar ist. Das Schubglied 73 ist ebenfalls in der Führungsnut 140 verschieblich, wobei das Schubglied 73 vorzugsweise in der Führungsnut 140 ausknicksicher geführt ist. Alternativ kann das Schubglied selbst knicksteif gestaltet sein, so dass eine ausknicksichere Führung nicht notwendig ist.

Die Führungsschiene 14 ist in dem dargestellten Ausführungsbeispiel in die Seitenverkleidung 120 der C-Säule 12 integriert und mit dieser in dem Kraftfahrzeug 1 montierbar. Das Heckscheibenrollo 6 ist unterhalb der Heckablage 15 montierbar. An der Sockeleinrichtung 8 ist ein Anschlussstück 80 vorgesehen, wobei die Führungsschiene 14 und das Anschlussstück 80 durch zueinander komplementäre Steckmittel miteinander kuppelbar sind.

Fig. 4 zeigt im Detail die Verbindung des Steckmittel der Führungsschiene 14 mit dem Steckmittels Anschlussstück 80 in einer geschnittenen Darstellung. Wie in Fig. 4 erkennbar, weist das Anschlussstück 80 eine Führungsnut 800 auf, welche koaxial zu der Führungsnut 140 der Führungsschiene 14 gestaltet ist. In dem dargestellten Ausführungsbeispiel ist das Anschlussstück 80 an einem Ende 801 aufgeweitet, so dass die Führungsschiene 14 in das Ende 801 einsteckbar ist. An dem Ende 801 des Anschlussstücks 80 sind weiter Federn 802 ausgebildet, welche in komplementäre Nuten 141 der Führungsschiene 14 greifen. Durch eine derart gebildete Steckverzahnung wird eine Verdrehsicherung erreicht. Weiter wird dadurch auch eine Breite B eines beim Kuppeln zwischen der Führungsschiene 14 und dem Anschlussstück 80 verbleibenden Spalts s verringert, so dass Holperstellen für ein Gleitelement 71 gemäß Fig. 3 vermeidbar sind. Eine maximale Einstecktiefe der Führungsschiene 14 in das Anschlussstück 80 ist durch einen Anschlag 803 an dem Anschlussstück 80 sowie die Tiefe der Nuten 141 begrenzt.

Fig. 5 zeigt eine Führungsschiene 14' und ein Anschlussstück 80' gemäß einem zweiten Ausführungsbeispiel der Erfindung. Die Bauteile entsprechen dabei im Wesentlichen den Bauteilen gemäß Fig. 4. Für gleiche Bauteile werden einheitliche Bezugszeichen verwendet und auf eine detaillierte Beschreibung dieser Bauteile wird verzichtet. An einem Ende 801' des Anschlussstücks 80' zum Aufnehmen der Führungsschiene 14' sind Rastnasen 804 ausgeformt, durch welche eine Bewegung der Führungsschiene 14' relativ zu dem Anschlussstück 80' in Axialrichtung A entgegen der Einsteckrichtung begrenzt ist. Durch die Rastnasen 804 sind das Anschlussstück 80' und die Führungsschiene 14' unter Spiel in Axialrichtung A miteinander verrastet. Dadurch wird ein ungewünschtes Lösen der Steckverbindung zwischen dem Anschlussstück 80' und der Führungsschiene 14' verhindert.

Die Anschlussstücke 80, 80' können wie beispielsweise aus der EP 1 533 157 A2 bekannt, an einem federelastischen Zapfen gelagert sein, so dass die bei der Sockeleinrichtung 8 gemäß EP 1 533 157 A2 realisierten Freiheitsgrade beibehalten werden. Zusätzlich wird erfindungsgemäß ein Toleranzausgleich in Axialrichtung A geschaffen.

## Patentansprüche

1. Seitenführung für ein Beschattungsrollo umfassend mindestens eine Führungsschiene (14, 14') mit einem ersten Steckmittel und ein Anschlussstück (80, 80') mit einem zweiten Steckmittel (801), das zu dem ersten Steckmittel komplementär und mit diesem kuppelbar ist, **dadurch gekennzeichnet, dass** die miteinander gekuppelten Steckmittel (801) für einen Toleranzausgleich relativ zueinander verschieblich sind.

2. Seitenführung nach Anspruch 1, **dadurch gekennzeichnet, dass** die Steckmittel (801) in Steckrichtung mindestens eine Nut (141) und eine dazu komplementäre Feder (802) aufweisen.

3. Seitenführung nach Anspruch 2, **dadurch gekennzeichnet, dass** die Steckmittel (801) in Steckrichtung eine Verzahnung (141, 802) aufweisen.

4. Seitenführung nach einem der Ansprüche 1 bis 3, **dadurch gekennzeichnet, dass** die Steckmittel (801) mindestens ein Rastelement (804) aufweisen, durch das die Führungsschiene (14') und das Anschtussstück (80') in Axialrichtung (A) unter Spiel miteinander verrastbar sind.

5. Seitenführung nach einem der Ansprüche 1 bis 4, **dadurch gekennzeichnet, dass** die Führungsschiene (14, 14') und das Anschlussstück (80, 80') koaxial kuppelbare Führungsnuten (140, 800) für ein Gleitelement (71) aufweisen.

6. Beschattungsrollo mit einem Auszugprofil (70), das an wenigstens einem Ende in einer Seitenführung nach einem der Ansprüche 1 bis 5 geführt ist.

7. Beschattungsrollo nach Anspruch 6, **dadurch gekennzeichnet, dass** die Führungsschiene (14) mit einem Seitenverkleidungsteil (120) eines Kraftfahrzeugs (1), insbesondere im Bereich einer C-Säule (12), verbunden und/oder zumindest abschnittsweise einteilig mit dem Seitenverkleidungsteil (120) gestaltet ist.

8. Beschattungsrollo nach Anspruch 6 oder 7, **dadurch gekennzeichnet, dass** das Anschlussstück (80, 80') an einer Sockeleinrichtung (8) ausgebildet und/oder mit einer Sockeleinrichtung (8) verbindbar ist.

9. Beschattungsrollo nach einem der Ansprüche 6, 7 oder 8, **gekennzeichnet durch** eine Antriebseinrichtung (72) zum Abwickeln einer Rollobahn (40, 60) von einer Wickelwelle (61) und/oder zum Aufwickeln der Rollobahn (40, 60) auf eine Wickelwelle (61).

10. Beschattungsrollo nach Anspruch 9, **dadurch gekennzeichnet, dass** die Antriebseinrichtung (72) mindestens ein biegsames Schubelement (73) umfasst, welches in der Führungsschiene (14, 14') und/oder dem Anschlussstück (80 80') führbar ist.

## Claims

1. Lateral guide for a shading roller blind comprising at least one guide rail (14, 14') with a first plug-in means and a connection piece (80, 80') with a second plug-in means (801) which is complementary to the first plug-means and is couplable thereto, **characterized in that** the intercoupled plug-in means (801) are displaceable relative to each other to compensate for tolerance.

2. Lateral guide according to claim 1, **characterized in that** the plug-in means (801) have in the plug-in direction at least one groove (141) and a tongue (802) complementary thereto.

3. Lateral guide according to claim 2, **characterized in that** the plug-in means (801) have teeth (141, 802) in the plug-in direction.

4. Lateral guide according to one of claims 1 to 3, **characterized in that** the plug-in means (801) have at least one locking element (804) by means of which the guide rail (14') and the connection piece (80') can be engaged with each other in the axial direction (A) with play.

5. Lateral guide according to one of claims 1 to 4, **characterized in that** the guide rail (14, 14') and the connection piece (80, 80') have coaxially couplable guide grooves (140, 800) for a sliding element (71).

6. Shading roller blind with a pull-out profile (70), which is guided at at least one end in a lateral guide according to one of claims 1 to 5.

7. Shading roller blind according to claim 6, **characterized in that** the guide rail (14) is connected to a side trim part (120) of a motor vehicle (1), in particular in the region of a C-pillar (12), and/or is configured in one piece with the side trim part (120) at least in certain sections.

8. Shading roller blind according to claim 6 or 7, **characterized in that** the connection piece (80, 80') is formed on a base arrangement (8) and/or is connectable to a base arrangement (8).

9. Shading roller blind according to claim 6, 7 or 8, **characterized by** a drive arrangement (72) for unwinding a roller blind web (40, 60) from a winding shaft (61) and/or for winding the roller blind web (40, 60) onto a winding shaft (61).

10. Shading roller blind according to claim 9, **characterized in that** the drive arrangement (72) comprises at least one flexible push element (73) which can be guided in the guide rail (14, 14') and/or the connection piece (80, 80').

## Revendications

1. Guide latéral pour un store d'occultation comprenant au moins un rail de guidage (14, 14') avec un premier moyen d'enfichage et une pièce de raccordement (80, 80') avec un second moyen d'enfichage (801) complémentaire au premier moyen d'enfichage et pouvant être couplé à celui-ci, **caractérisé en ce que** les moyens d'enfichage (801) couplés entre eux peuvent se déplacer l'un par rapport à l'autre pour une compensation de tolérance.

2. Guide latéral selon la revendication 1, **caractérisé en ce que** les moyens d'enfichage (801) présentent dans le sens d'enfichage au moins une rainure (141) et une languette (802) complémentaire à celle-ci.

3. Guide latéral selon la revendication 2, **caractérisé en ce que** les moyens d'enfichage (801) présentent une denture (141, 802) dans le sens d'enfichage.

4. Guide latéral selon l'une des revendications 1 à 3, **caractérisé en ce que** les moyens d'enfichage (801) présentent au moins un élément à crans (804) grâce auquel le rail de guidage (14') et la pièce de raccordement (80') peuvent être enclenchés dans le sens axial (A) avec du jeu.

5. Guide latéral selon l'une des revendications 1 à 4, **caractérisé en ce que** le rail de guidage (14, 14') et la pièce de raccordement (80, 80') présentent des rainures de guidage (140, 800) pouvant être couplées coaxialement pour un élément coulissant (71).

6. Store d'occultation avec un profilé de déroulement (70) qui est guidé à au moins une extrémité dans un guide latéral selon l'une des revendications 1 à 5.

7. Store d'occultation selon la revendication 6, **caractérisé en ce que** le rail de guidage (14) est relié à un élément d'habillage latéral (120) d'un véhicule (1), en particulier dans la zone d'un montant latéral arrière (12), et/ou conçu au moins en partie en une pièce avec l'élément d'habillage latéral (120).

8. Store d'occultation selon la revendication 6 ou 7, **caractérisé en ce que** la pièce de raccordement (80, 80') est conçue sur un dispositif de socle (8) et/ou peut être reliée à un dispositif de socle (8).

9. Store d'occultation selon l'une des revendications 6, 7 ou 8, **caractérisé par** un dispositif d'entraînement (72) pour dérouler une bande de store (40, 60) d'un arbre d'enroulement (61) et/ou pour enrouler la bande de store (40, 60) sur un arbre d'enroulement (61).

10. Store d'occultation selon la revendication 9, **caractérisé en ce que** le dispositif d'entraînement (72) comprend au moins un élément pousseur (73) flexible qui peut être conduit dans le rail de guidage (14, 14') et/ou dans la pièce de raccordement (80, 80').
